# EUROPÄISCHE PATENTANMELDUNG

(11) **EP 2 267 854 A1**
(43) Veröffentlichungstag der Anmeldung: **29.12.2010**
(21) Anmeldenummer: 10013007.9
(22) Anmeldetag: 02.03.2007
(51) Int. Cl.: H02G 3/04, H01R 13/625

(54) **Bajonettverschluss mit Selbstkontaktierung**

(30) Priorität: 25.03.2006 DE 202006004768 U
(62) Teilanmeldung aus: 07004297.3
(71) Anmelder: Tehalit GmbH, 67716 Heltersberg (DE)
(72) Erfinder: Schmitt, Erwin, 67659 Kaiserslautern (DE)
(74) Vertreter: Patentanwälte Möll, Bitterich & Dr. Keller

(57) **Zusammenfassung**

Die vorliegende Erfindung betrifft eine Raumsäule zur elektrischen Selbstkontaktierung, umfassend ein Gehäuse (35), im Inneren des Gehäuses (35) angeordnete Elektroinstallationsgeräte, eine Bodenplatte (32) mit einem Bajonettfuß (20), der mit einem Bajonettsockel (10) kooperiert. Der Bajonettsockel (10) enthält eine erste Kontaktleiste (17) mit Steckkontakten (18). Der Bajonettfuß (20) enthält eine zweite Kontaktleiste (23) mit Steckbuchsen (25). Eine der beiden Kontaktleisten (17, 23) ist drehbar im Bajonettsockel (10) bzw. Bajonettfuß (20) eingefasst oder mit diesen fest verbunden, wobei dann entweder die erste Kontaktleiste (17) oder die zweite Kontaktleiste (23) mit drehbaren Steckkontakten (18, 25) versehen ist, so dass beim Aufsetzen des Bajonettfußes (20) auf den Bajonettsockel (10) ein elektrischer Drehkontakt entsteht.

## Beschreibung

Die vorliegende Erfindung betrifft eine Raumsäule zur elektrischen Selbstkontaktierung gemäß dem Oberbegriff des Anspruchs 1. Zur mechanischen Verbindung ist die Raumsäule vorzugsweise mit einem Bajonettverschluss ausgerüstet, wobei auch andere Montageformen möglich sind.

Raumsäulen oder Energiesäulen werden in modernen Büroräumen eingesetzt, um die einzelnen Arbeitsplätze mit Energie und Daten zu versorgen. Häufig handelt es sich hierbei um fest installierte oder mobile Vorrichtungen, welche die Versorgung beispielsweise für einen Schreibtisch sicherstellen. Bei der Montage fest installierter Raumsäulen stellt sich das Problem, dass diese auf möglichst einfache Weise und schnell montiert werden sollen. Bislang werden Raumsäulen verschraubt.

Bajonettverschlüsse werden bislang schon in den unterschiedlichsten Bereichen zum Verbinden zweier Teile eingesetzt. Sie finden beispielsweise Verwendung bei Behältern wie Flaschen, Kameraobjektiven, Lampen und elektrischen Steckkupplungen.

Die DE 37 26 386 A1 beschreibt eine schnell trennbare elektrische Steck-Verbindungskupplung mit einer Steckeranordnung, die eine Steckaufnahme umschließt und in diese aufgenommen wird. Die zylindrische Steckeraufnahme (Steckdose) besteht aus einer Anzahl von an der Außenseite des Steckeraufnahmegehäuses angeordneten festen Bajonettstiften, die in Ausschnitte eines Kupplungsringes greifen. Die elektrische Steckverbindung erfolgt bei dieser Konstruktion manuell mit der Hand.

Die oben beschriebenen Verschlüsse für elektrische Steckverbindungen bei Raumsäulen haben den Nachteil, dass die mechanische und elektrische Verbindung in zwei Schritten durchgeführt werden muss. Dann müssen die elektrischen Kontakte hergestellt werden. Dazu müssen die elektrischen Steckverbindungen manuell mit der Hand zusammengesteckt werden. Je nach Größe und Anzahl der Steckkontakte kann das Anschließen der elektrischen Steckkontakte sehr aufwendig sein.

Der vorliegenden Erfindung liegt daher die Aufgabe zugrunde, eine Raumsäule bereitzustellen, bei der gleichzeitig eine mechanische und elektrische Verbindung bei der Montage hergestellt wird (Selbstkontaktierung).

Diese Aufgabe wird gelöst durch eine Raumsäule mit den Merkmalen des Anspruchs 1.

Die erfindungsgemäße Raumsäule enthält zur elektrischen Kontaktierung eine erste Kontaktleiste mit Steckbuchsen. Vorzugsweise befindet sich diese in einem Bajonettsockel. Der Bajonettverschluss besteht aus einem Bajonettsockel, an dessen Außenmantel einzelne Nocken angebracht sind. Auf den Bajonettsockel wird ein Bajonettfuß aufgeschoben, so dass die seitlichen Nocken des Bajonettsockels in die dafür vorgesehenen seitlichen Führungsschlitze des Bajonettfußes greifen. Diese weisen zunächst einen steilen und später in Richtung ihrer Erweiterung flachen Verlauf auf. Dadurch können die Nocken mit geringem Kraftaufwand in die Führungsschlitze geleitet werden und schließlich in ihrer Endposition beim Eindrehen des Bajonettfußes einrasten.

Das Gegenstück zu den Steckbuchsen des Bajonettsockels befindet sich in einer zweiten Kontaktleiste im Bajonettfuß. Beim Aufsetzen des Bajonettfußes auf den Bajonettsockel greifen die Stecker in die jeweiligen Buchsen. Damit beim Eindrehen des Bajonettfußes die Steckkontakte erhalten bleiben, wird eine der beiden Kontaktleisten drehbar gemacht. Auf diese Weise drehen sich die Kontaktleisten entsprechend der Drehung des Bajonettfußes beim Einrasten mit. Eine Feder dreht die bewegliche Kontaktleiste in die Grundstellung zurück. Dabei definiert der Anschlag die Grundstellung.

In einer anderen Ausführungsform sind die beiden Kontaktleisten im Bajonettsockel bzw. -fuß fest integriert. In diesem Fall sind in den Steckbuchsen Drehkontakte enthalten, die ein Drehen der Stecker in den Buchsen ermöglichen.

Es ist nicht notwendig, daß sich die Nocken am Bajonettsockel und die Führungsschlitze am Bajonettfuß befinden. Für einen Bajonettverschluss können die Nocken auch am Bajonettfuß und die Führungsschlitze am Bajonettsockel angebracht sein.

Die erfindungsgemäße Raumsäule hat den Vorteil, dass beim Aufsetzen und Eindrehen des Bajonettfußes auf den Bajonettsockel mit der mechanischen Arretierung gleichzeitig eine elektrische Kontaktierung hergestellt wird. Auf diese Weise wird beispielsweise ein Elektroinstallationsgerät mit den Kabeln und Leitungen einer Bodenauslassdose verbunden. Nachträgliche Installationsmaßnahmen sind nicht mehr notwendig. Dies ist insbesondere bei sehr kleinen Bodenauslassdosen und Steckverbindungen vorteilhaft. Vorzugsweise sind deshalb die Steckverbindungen unter Last und Spannung steck- und trennbar.

Der Bajonettfuß ist vorzugsweise an einer Raumsäule angebracht. Die Raumsäule enthält mehrere Elektroninstallationsgeräte wie Steckbuchsen oder Netzwerkanschlüsse, um einen Einzelarbeitsplatz mit im Boden verlaufenden Energie- und Datenleitungen zu versorgen. Die Raumsäule kann auf den Bajonettsockel aufgeschoben und durch leichtes Drehen eingerastet werden. Damit ist die Raumsäule direkt an das Versorgungs- und Leitungsnetzwerk im Boden angeschlossen.*

Ein weiterer Vorteil ist, dass der Bajonettverschluss leicht gelöst werden kann, ohne dass die elektrischen Steckkontakte vorher gelöst werden müssen. Der Bajonettfuß wird einfach aus dem Bajonettsockel herausgedreht. Dabei werden auch die Steckkontakte gelöst.

Anhand der vorliegenden Zeichnungen soll die Erfindung in Form von speziellen Ausführungsbeispielen näher erläutert werden. Es zeigen
- Fig. 1: einen Bajonettfuß, der an einer Raumsäule angebracht ist,
- Fig. 2: einen Bajonettsockel in Draufsicht,
- Fig. 3: einen Bajonettfuß.

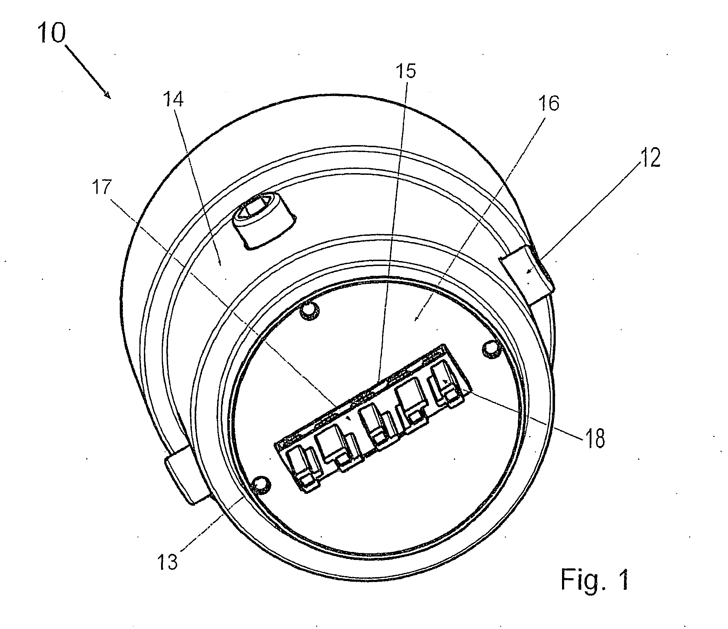

Fig. 1 zeigt ein Anwendungsbeispiel des erfindungsgemäßen Bajonettverschlusses. Man erkennt den Bajonettfuß 20 mit den seitlichen Führungsschlitzen 24. Der Bajonettfuß 20 ist mit einer Bodenplatte 32 verbunden. Die Bodenplatte 32 bildet die Unterseite einer Raumsäule 30. An der Raumsäule 30 befinden sich Griffe 33, um ein Aufsetzen des Bajonettfußes 20 auf den Bajonettsockel 10 zu erleichtern. Um an die sich im Innenraum der Raumsäule 30 befindlichen Elektroinstallationsgeräte zu gelangen, ist vorzugsweise eine Tür 34 vorgesehen, die mit einem Schwenkgriff 31 verschließbar ist. Dazu besitzt die Raumsäule 30 seitlich am Gehäuse 35 angebrachte Scharniere 36.

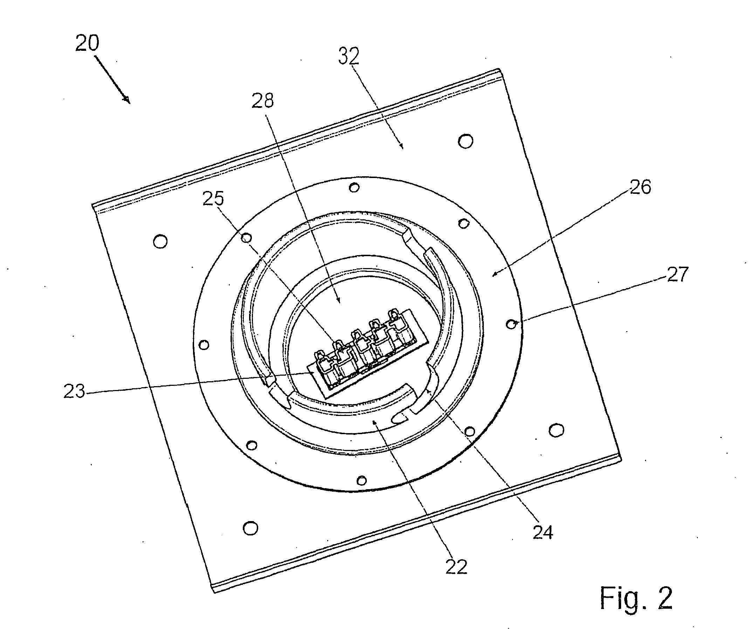

Fig. 2 zeigt einen Bajonettsockel 10 mit seitlich aus der Oberfläche herausstehenden Nocken 12. Die Nocken 12 befinden sich vorzugsweise an einem Nockenring 14. In dem.Bajonettsockel 10 befindet sich eine Aufnahmeplatte 16. Die Aufnahmeplatte 16 enthält eine erste Kontaktleiste 17 mit darin angebrachten Steckkontakten 18. Die Aufnahmeplatte 16 kann mit entsprechenden Befestigungsmitteln über Öffnungen 13 am Bajonettsockel 10 befestigt werden. Die Kontaktleiste 17 ist in einer Ausführungsform entweder über eine Öffnung 15 in die Aufnahmeplatte 16 fest eingesetzt oder drehbar daran befestigt.

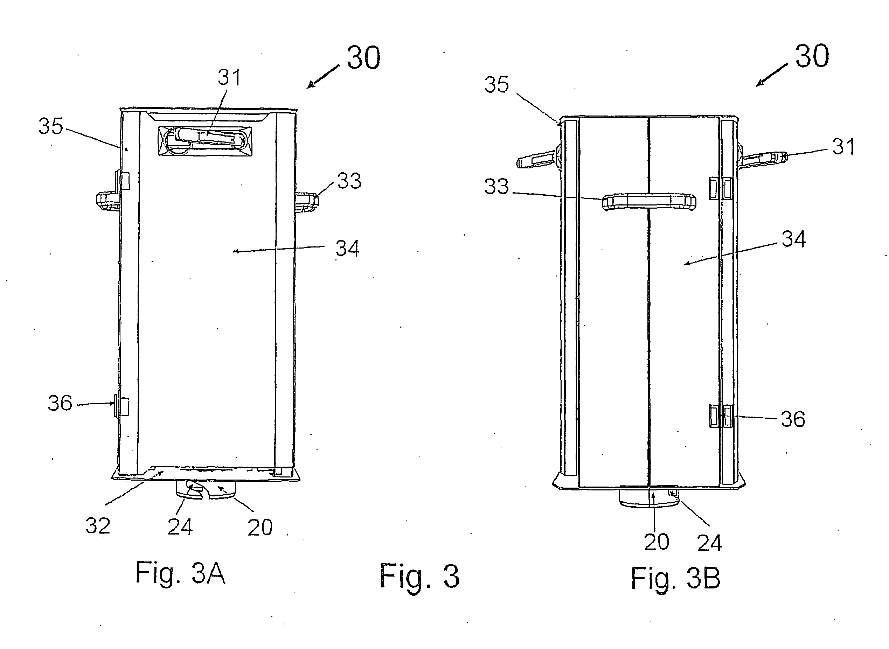

Fig. 3 zeigt einen Bajonettfuß 20 mit einer darin eingesetzten zweiten Kontaktleiste 23. Die zweite Kontaktleiste 23 besitzt Steckbuchsen 25, in welche die Steckkontakte 18 des Bajonettsockels 10 steckbar sind. Entweder die erste oder zweite Kontaktleiste 17, 23 wird beweglich gehalten. Alternativ können auch Drehkontakte zur Anwendung kommen. In diesem Fall sind die Kontaktleisten 17, 23 fest in der Aufnahmeplatte 16 eingesetzt.

Der Bajonettfuß 20 weist seitliche Führungsschlitze 24 auf. In diese Führungsschlitze 24 greifen die Nocken 12 des Bajonettsockels 10. Der Verschluß erfolgt durch leichtes Drehen des Bajonettfußes 20 und anschließendem Einrasten der Nocken 12 in das Ende der Führungsschlitze 24 des Bajonettfußes 20.

Der Bajonettfuß 20 kann über einen Montagering 26 an einer Bodenplatte 32 befestigt sein. Hierzu sind Öffnungen 27 vorgesehen. Die Kontaktleiste 23 ist entweder drehbar an einer Montageplatte 28 befestigt oder ist fest in dieser eingesetzt. Die Bodenplatte 32 kann beispielsweise das Unterteil einer Raumsäule 30 bilden (siehe Fig. 3).

## Patentansprüche

1. Raumsäule, umfassend:
- ein Gehäuse (35),
- im Inneren des Gehäuses (35) angeordnete Elektroinstallationsgeräte,
- eine Bodenplatte (32) mit einem Bajonettfuß (20), der mit einem Bajonettsockel (10) kooperiert,
**gekennzeichnet durch** die Merkmale:
- der Bajonettsockel (10) enthält eine erste Kontaktleiste (17) mit Steckkontakten (18),
- der Bajonettfuß (20) enthält eine zweite Kontaktleiste (23) mit Steckbuchsen (25),
- eine der beiden Kontaktleisten (17, 23) ist drehbar im Bajonettsockel (10) bzw. Bajonettfuß (20) eingefasst oder mit diesen fest verbunden, wobei dann entweder die erste Kontaktleiste (17) oder die zweite Kontaktleiste (23) mit drehbaren Steckkontakten (18, 25) versehen ist, so dass beim Aufsetzen des Bajonettfußes (20) auf den Bajonettsockel (10) ein elektrischer Drehkontakt entsteht.

2. Raumsäule nach Anspruch 1, **gekennzeichnet durch** das Merkmal:
- am Bajonettsockel (10) sind drei zu einem gleichschenkligen Dreieck angeordnete Nocken (12) ausgeformt.

3. Raumsäule nach einem der vorhergehenden Ansprüche, **gekennzeichnet durch** die Merkmale:
- in dem Bajonettsockel (10) ist eine Aufnahmeplatte (16) eingefasst,
- die Kontaktleiste (17) ist in eine Öffnung (15) eingefasst.

4. Raumsäule nach einem der vorhergehenden Ansprüche, **gekennzeichnet durch** das Merkmal:
- an der Kontaktleiste (17) befinden sich drehbare Steckkontakte (18).

5. Raumsäule nach einem der vorhergehenden Ansprüche, **gekennzeichnet durch** das Merkmal:
- die Steckkontakte (18) sind mit Energie- und Datenversorgungsleitungen im Boden verbunden.

6. Raumsäule nach einem der vorhergehenden Ansprüche, **gekennzeichnet durch** das Merkmal:
- die Kontaktleiste (17) ist drehbar auf der Aufnahmeplatte (16) befestigt.

7. Raumsäule nach einem der vorhergehenden Ansprüche, **gekennzeichnet durch** das Merkmal:
- der Bajonettfuß (20) enthält einen Montagering (26) mit Befestigungslöchern (27).

8. Raumsäule nach einem der vorhergehenden Ansprüche, **gekennzeichnet durch** das Merkmal:
- die zweite Kontaktleiste (23) ist in eine Montageplatte (28) eingefasst oder drehbar an dieser befestigt.

9. Raumsäule nach einem der vorhergehenden Ansprüche, **gekennzeichnet durch** das Merkmal:
- die Steckbuchsen (25) der zweiten Kontaktleiste (23) sind drehbar.

10. Raumsäule nach einem der vorhergehenden Ansprüche, **gekennzeichnet durch** das Merkmal:
- der Bajonettfuß (20) ist über einen Montagering (26) an einer Bodenplatte (32) befestigt oder wird von dieser ausgeformt.

11. Raumsäule nach einem der vorhergehenden Ansprüche, **gekennzeichnet durch** die Merkmale:
- die Nocken (12) befinden sich am Bajonettfuß (20),
- die Führungsschlitze (24) befinden sich am Bajonettsockel (10).

12. Raumsäule nach einem der vorhergehenden Ansprüche, **gekennzeichnet durch** das Merkmal:
- an der Raumsäule (30) befindet sich eine Tür (34), die mit einem Schwenkgriff (31) über Scharniere (36) zu öffnen ist.

13. Raumsäule nach einem der vorhergehenden Ansprüche, **gekennzeichnet durch** das Merkmal:
- eine der beiden Kontaktleisten (17, 23) ist **durch** eine Feder in die Grundstellung verstellbar.
